# EUROPEAN PATENT APPLICATION

(11) **EP 4 083 526 A1**
(43) Date of publication of application: **02.11.2022**
(21) Application number: 21920116.7
(22) Date of filing: 12.11.2021
(51) Int. Cl.: F24F 8/10, F24F 8/167, F24F 8/192, F24F 8/80, F24F 8/90, B03C 3/74, B08B 3/00

(54) **AIR PURIFIER AND CLEANING METHOD THEREFOR**

(30) Priority: 04.03.2021 CN 202110237549
(71) Applicant: Beiang Air Tech Ltd., Suzhou, Jiangsu 215000 (CN)
(72) Inventor: RAN, Hognyu, Suzhou Jiangsu 215000 (CN); ZHANG, Yan, Suzhou Jiangsu 215000 (CN); LIU, Yigang, Suzhou Jiangsu 215000 (CN); LU, Yaoyuan, Suzhou Jiangsu 215000 (CN); LI, Hongqiang, Suzhou Jiangsu 215000 (CN); ZHANG, Qidong, Suzhou Jiangsu 215000 (CN)
(74) Representative: RGTH
(86) International application number: PCT/CN2021/130306
(87) International publication number: WO 2022/183770

(57) **Abstract**

The present application provide an air purifier and a cleaning method for same The air purifier includes: a housing, which is provided with an air inlet and an air outlet and a detachable door panel; a protective cover, which is detachably disposed on an inner wall of the housing and opposite to the door panel, and located between the air inlet and the air outlet; and an electrostatic filter element, which includes an emission assembly and a collection assembly, the emission assembly and the collection assembly are detachably disposed in the protective cover, the emission assembly is located at a side of the collection assembly close to the air inlet. The detachable protective cover is provided to facilitate washing and protect the housing. The emission assembly and the collection assembly are detachably mounted in the protective cover, so that they can be separately cleaned.

## Description

### CROSS-REFERENCE TO RELATED APPLICATION

The patent application claims priority to Chinese patent application No. 2021102375492 filed on March 4, 2021, the disclosure of which is hereby incorporated by reference in their entirety.

### FIELD OF THE INVENTION

The present application relates to the field of air purification technology, and specifically, to an air purifier and a cleaning method for same.

### DESCRIPTION OF THE RELATED ART

With the increasing concern and demand for air quality in people's lives, it is becoming more and more common for people to improve indoor air quality with air purifiers. An air purifier based on electrostatic dust collection technology includes an electrostatic filter element provided between an air inlet and an air outlet. Air enters the air purifier through the air inlet, passes through the electrostatic filter element, and is discharged through the air outlet. A purification filter element adsorbs pollutants in the air to purify the air. After the air purifier has been used for a period of time, pollutants tend to accumulate on an inner wall of a housing and the electrostatic filter element. Therefore, it is necessary to wash the electrostatic filter element and the inner wall of the air purifier regularly during use.

An electrostatic filter element provided in the prior art is generally integrated. Emission wires in the electrostatic filter element, repulsion plates in a collection block, and collection plates in the collection block are integrated together. Because the emission wires are relatively thin and are prone to fracture under the action of an external force, it is difficult to wash the electrostatic filter element, and the electrostatic filter element can hardly be thoroughly washed. In addition, it is difficult to wash pollutants on an inner wall of a housing because such pollutants are located inside the housing.

### SUMMARY OF THE INVENTION

An object of the embodiments of the present application is to provide an air purifier and a cleaning method for same, to facilitate the cleaning of the air purifier and improve the cleaning effect.

According to a first aspect, embodiments of the present application provide an air purifier, including:
a housing, the housing being provided with an air inlet and an air outlet and a detachable door panel;
a protective cover, detachably disposed on an inner wall of the housing and opposite to the door panel, and located between the air inlet and the air outlet; and
an electrostatic filter element, including an emission assembly and a collection assembly, the emission assembly and the collection assembly being detachably disposed in the protective cover, the emission assembly being located at a side of the collection assembly close to the air inlet.

In the foregoing implementation, the detachable protective cover is disposed. In one aspect, pollutants accumulate on the protective cover rather than the inner wall of the housing, to facilitate washing. In another aspect, the protective cover is located between the housing and the electrostatic filter element, to avoid the breakdown of the housing in an electric field or the attenuation in insulation performance, thereby protecting the housing. The emission assembly and the collection assembly are detachably mounted in the protective cover, and thus can be separately cleaned. Corresponding cleaning manners may be used according to characteristics of the emission assembly and the collection assembly, cleaning requirements, and the like, thereby improving the cleaning efficiency and cleaning effect.

Preferably, the collection assembly includes:
a repulsion electrode plate group, the repulsion electrode plate group being detachably disposed in the protective cover; and
at least a collection electrode plate group, the collection electrode plate group being detachably inserted in the repulsion electrode plate group.

In the foregoing implementation, the collection assembly may be further divided into a collection electrode plate group and a repulsion electrode plate group. Pollutants accumulate on the collection electrode plate group, and it is only necessary to wash the collection electrode plate group. The washing is facilitated after detachment, thereby improving the cleaning efficiency and the cleaning effect.

Preferably, the repulsion electrode plate group includes a frame body and a plurality of repulsion electrode plates arranged in an array in the frame body, a first mounting groove matching the frame body is provided in the protective cover, and the frame body is detachably disposed in the first mounting groove; and
the collection electrode plate group includes a plurality of collection electrode plates distributed in an array, and the plurality of collection electrode plates are detachably inserted in the frame body and are distributed in a staggered manner with the plurality of repulsion electrode plates.

In the foregoing implementation, the frame body is detachably provided in the first mounting groove in the protective cover fit , the repulsion electrode plates are located in the frame body, the collection electrode plates are detachably inserted in the frame body, and only the frame body needs to be removed in the process of removing the collection assembly from the housing and mounting the collection assembly back in the housing. In addition, the repulsion electrode plates and the collection electrode plates are distributed in a staggered manner. An inter-plate distance before detachment is an interval between a collection electrode plate and an adjacent repulsion electrode plate, and an inter-plate distance after detachment is a distance between two adjacent collection electrode plates. An inter-plate interval after detachment is larger, to further facilitate washing. A cleaning surface is larger, thereby significantly improving the cleaning effect. In addition, the increased inter-plate interval improves the ventilation effect, and a drying time after cleaning is significantly shortened.

Preferably, the frame body is pluggably disposed in the first mounting groove; and
a handle is provided on the frame body; and/or an indication sign for indicating a mounting direction is disposed on the frame body.

In the foregoing implementation, the frame body is pluggably disposed to facilitate mounting and removal. The handle is disposed to make it convenient to apply a force during plugging. The indication sign is provided to indicate the mounting direction during mounting, thereby reducing the mounting difficulty.

Preferably, a second mounting groove is provided in the protective cover, and the emission assembly is detachably disposed in the second mounting groove and is opposite to the collection assembly at an interval.

In the foregoing implementation, the second mounting groove is provided in the protective cover, to facilitate the mounting of the emission assembly.

Preferably, the protective cover is a soft rubber cover made of an insulating material.

In the foregoing implementation, the soft rubber cover can have excellent performance in high voltage resistance and pollution resistance and is convenient to wash.

Preferably, the air purifier further includes a primary filter member, the primary filter member is detachably disposed in the housing and located at a side of the emission assembly close to the air inlet.

In the foregoing implementation, after pollutant-containing air enters the housing through the air inlet, the air first passes through the primary filter member to initially filter out relatively large pollutants such as hair, so that filtration can be more thorough, thereby improving the cleaning effect. In addition, relatively large pollutants can be prevented from causing blockage in the electrostatic filter element, thereby extending the life cycle. The primary filter member is detachably disposed to facilitate removal for cleaning.

Preferably, the air purifier further includes a catalytic filter element, the catalytic filter element is detachably disposed in the housing and located at a side of the collection assembly close to the air outlet.

In the foregoing implementation, air that has been purified by the electrostatic filter element enters the catalytic filter element for further filtration, to make the filtration more thorough, thereby improving the cleaning effect. The catalytic filter element is detachably disposed, to facilitate removal and replacement.

According to a second aspect, the embodiments of the present application provide a method for cleaning any foregoing air purifier, the method includes:
detaching the door panel;
removing the emission assembly and the collection assembly from the protective cover, and
removing the protective cover from the housing;
washing the protective cover and the collection assembly;
wiping the emission assembly;
mounting the protective cover in the housing, and mounting the emission assembly and the collection assembly in the protective cover; and
mounting the door panel.

In the foregoing implementation, the detachable protective cover is provided. In one aspect, pollutants accumulate on the protective cover rather than the inner wall of the housing, to facilitate washing. In another aspect, the protective cover is located between the housing and the electrostatic filter element, to avoid the breakdown of the housing in an electric field or the attenuation in insulation performance, thereby protecting the housing. The emission assembly and the collection assembly are detachably mounted in the protective cover, so that they can be separately cleaned. Corresponding cleaning manners may be used according to characteristics of the emission assembly and the collection assembly, cleaning requirements, and the like, thereby improving the cleaning efficiency and cleaning effect.

Preferably, the washing the collection assembly includes:
removing the collection electrode plate group from the repulsion electrode plate group;
washing the collection electrode plate group; and
mounting the washed collection electrode plate group in the repulsion electrode plate group.

In the foregoing implementation, the separate design of the collection electrode plate group and the repulsion electrode plate group facilitates separate washing. In addition, after the collection electrode plate group and the repulsion electrode plate group are removed, an inter-plate distance is increased, the cleaning surface is convenient to wash, and drying after washing can be accelerated.

### BRIEF DESCRIPTION OF THE DRAWINGS

To describe the technical solutions in the embodiments of the present application more clearly, the following briefly introduces the accompanying drawings required for the embodiments of the present application. Apparently, the following accompanying drawings show merely some embodiments of the present application and therefore should not be considered as a limitation to the scope. A person of ordinary skill in the art may still derive other related drawings from these accompanying drawings without creative efforts.
FIG. 1 is a schematic diagram of the overall structure of an air purifier according to an embodiment of the present application;
FIG. 2 is a schematic diagram of the distribution of parts inside an air purifier according to an embodiment of the present application;
FIG. 3 is a schematic structural diagram of a collection assembly in an air purifier according to an embodiment of the present application; and
FIG. 4 is a schematic structural diagram of a protective cover in an air purifier according to an embodiment of the present application.

### Reference Numerals:

1-housing, 2-protective cover, 21-first mounting groove, 22-second mounting groove, 3-emission assembly, 4-collection assembly, 41-repulsion electrode plate group, 411-frame body, 412-repulsion electrode plate, 42-collection electrode plate group, 421-first collection electrode plate, 422-second collection electrode plate, 423-first connecting plate, 424-second connecting plate, 425-third connecting plate, 426-fourth connecting plate, 5-primary filter member, and 6-catalytic filter element.

### DETAILED DESCRIPTION OF THE PREFERRED EMBODIMENTS

The following describes the technical solutions in embodiments of the present application with reference to the accompanying drawings in embodiments of the present application.

It should be noted that similar labels and letters indicate similar items in the accompanying drawings below, so that once an item is defined in one accompanying drawing, the item does not need to be further defined and explained in the subsequent accompanying drawings. In addition, in the description of the present application, the terms "first", "second", and the like are only used only for distinguishing between descriptions but are not intended to indicate or imply relative importance.

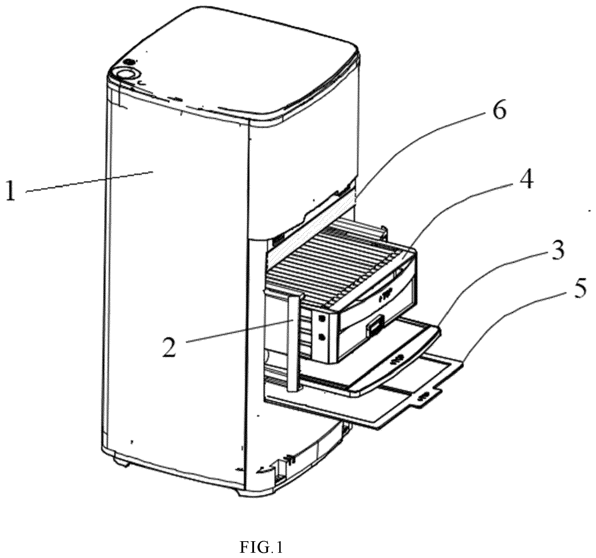

According to a first aspect, the embodiments of the present application provide an air purifier. As shown in FIG. 1 to FIG. 4, the air purifier includes: a housing 1, the housing 1 is provided with an air inlet and an air outlet and a detachable door panel; a protective cover 2, detachably disposed on an inner wall of the housing 1 and opposite to the door panel, and located between the air inlet and the air outlet; and an electrostatic filter element, including an emission assembly 3 and a collection assembly 4, the emission assembly 3 and the collection assembly 4 are detachably disposed in the protective cover 2, and the emission assembly 3 is located at a side of the collection assembly 4 close to the air inlet.

During the use of the air purifier provided in this embodiment, pollutant-containing air enters the housing 1 through the air inlet, and sequentially passes through the emission assembly 3 and the collection assembly 4 in the protective cover 2, and is discharged through the air outlet. The collection assembly 4 adsorbs the pollutants in the air to complete a purification process. In the purification process, the collection assembly 4 keeps a relatively large amount of pollutants due to the adsorption function of the collection assembly, and pollutants also pass through and accumulate on an inner wall of the protective cover 2 and the emission assembly 3. Therefore, the air purifier needs to be cleaned after being used for a period of time. During cleaning, the door panel can be opened, the emission assembly 3 and the collection assembly 4 are removed from the protective cover 2, and the protective cover 2 is removed from the housing 1. In this case, the protective cover 2 and the collection assembly 4 may be separately washed, and the emission assembly 3 is wiped with soft foam. After the washing is completed, the protective cover 2 is mounted in the housing 1, the emission assembly 3 and the collection assembly 4 are mounted in the protective cover 2, then the door panel is mounted, and the cleaning process ends.

As can be seen, in the air purifier provided in this embodiment, the detachable protective cover 2 is provided. In one aspect, pollutants accumulate on the protective cover 2 rather than the inner wall of the housing 1, to facilitate washing. In another aspect, the protective cover 2 is located between the housing 1 and the electrostatic filter element, to avoid the breakdown of the housing 1 in an electric field or the attenuation in insulation performance, thereby protecting the housing 1. The emission assembly 3 and the collection assembly 4 are detachably mounted in the protective cover 2, so that the emission assembly 3 and the collection assembly 4 can be separately cleaned Corresponding cleaning manners may be used according to characteristics of the emission assembly 3 and the collection assembly 4, cleaning requirements, and the like, thereby improving the cleaning efficiency and cleaning effect.

The foregoing emission assembly 3 is an assembly supplying a high-voltage electrostatic field in the electrostatic filter element to charge pollutant particles. The emission assembly 3 is located in front of the collection assembly 4 in an airflow direction, to charge the particles. The charged particles enter the collection assembly 4 and are collected in the collection assembly 4 due to the charge nature that like charges repel each other and unlike charges attract each other.

A plurality of emission wires may be provided in the emission assembly 3. The plurality of emission wires are distributed in an array, to generate a uniform electrostatic field to charge the particles that pass through the emission assembly 3. A wire diameter of the emission wires may be 0.03 mm to 0.2 mm, for example, may be 0.03 mm, 0.1 mm, or 0.2 mm. Because the emission wires have a relatively small wire diameter, during cleaning, it is difficult for the emission assembly 3 to bear a relatively large force. In addition, the emission wires are only used for the passage of pollutant particles but are not used for collection, and there is a relatively small amount of pollutants on the emission wires. Therefore, after the emission assembly 3 is removed from the protective cover 2, a relatively soft material such as soft foam or sponge may be used for wiping to achieve a cleaning effect.

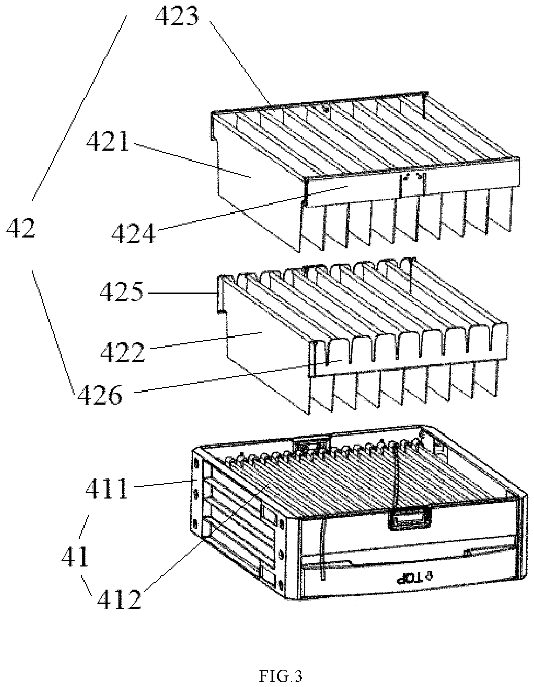

In some optional implementations of this embodiment, as shown in FIG. 3, the collection assembly 4 may include: a repulsion electrode plate group 41, the repulsion electrode plate group 41 is detachably disposed in the protective cover 2; and at least one collection electrode plate group 42, the collection electrode plate group 42 is detachably inserted in the repulsion electrode plate group 41. In such an arrangement, the collection assembly 4 may be further divided into a collection electrode plate group 42 and a repulsion electrode plate group 41. Pollutants accumulate on the collection electrode plate group 42, and it is only necessary to wash the collection electrode plate group 42. In addition, after detachment, the washing is facilitated, thereby improving the cleaning efficiency and the cleaning effect. Optionally, as shown in FIG. 3, the repulsion electrode plate group 41 includes a frame body 411 and a plurality of repulsion electrode plates 412 arranged in an array in the frame body 41. A first mounting groove 21 matching with the frame body 411 is provided in the protective cover 2, and the frame body 411 is detachably disposed in the first mounting groove 21. The collection electrode plate group 42 includes a plurality of collection electrode plates distributed in an array, and the plurality of collection electrode plates are detachably inserted in the frame body 411 and are distributed in a staggered manner with the plurality of repulsion electrode plates 412.

In such an arrangement, the frame body 411 and the first mounting groove 21 in the protective cover 2 fit and are detachably provided, the repulsion electrode plates 412 are located in the frame body 411, the collection electrode plates are detachably inserted in the frame body 411, and only the frame body 411 needs to be removed in the process of removing the collection assembly 4 from the housing 1 and mounting the collection assembly back in the housing. In addition, the repulsion electrode plates 412 and the collection electrode plates are distributed in a staggered manner. An inter-plate distance before detachment is an interval between a collection electrode plate and an adjacent repulsion electrode plate 412, and an inter-plate distance after detachment is a distance between two adjacent collection electrode plates. An inter-plate interval after detachment is larger, to further facilitate washing. A user may use a hand to directly touch any position and may perform cleaning without any blind spot. The effective cleaning surface is nearly 100%. Compared with the prior art that only the surface can be cleaned and the cleaning surface even accounts for only less than 10%, the cleaning effect is significantly improved. In addition, the increased inter-plate interval improves the ventilation effect, and a drying time after cleaning is clearly shortened.

The foregoing collection electrode plate may have a polarity opposite to that of the charged particles, and the repulsion electrode plate 412 may have a polarity the same as that of the charged particles. The charged particles are adsorbed to the collection electrode plates under a repulsive force of the repulsion electrode plate 412 and an attractive force of the collection electrode plate to complete an adsorption process.

In an example, the collection electrode plate group 42 may include a plurality of collection electrode plates distributed in an array. When a quantity of the collection electrode plates in the collection electrode plate group 42 is the same as a quantity of the repulsion electrode plates 412 in the repulsion electrode plate group 41, in a staggered arrangement, there may be one collection electrode plate between two adjacent repulsion electrode plates 412. In an example, a collection electrode plate equally divides a space between two adjacent repulsion electrode plates 412. After the collection electrode plate group 42 and the repulsion electrode plate group 41 are detached, an inter-plate distance is doubled.

In another example, as shown in FIG. 3, the collection electrode plate group 42 may include a first collection electrode plate group 42 and a second collection electrode plate group 42. The first collection electrode plate group 42 may include a plurality of first collection electrode plates 421 distributed in an array. The second collection electrode plate group 42 may include a plurality of second collection electrode plates 422 distributed in an array. When a quantity of the first collection electrode plates 421 and a quantity of the second collection electrode plates 422 are the same as a quantity of the repulsion electrode plates 412, there may be one first collection electrode plate 421 and one second collection electrode plate 422 between two adjacent repulsion electrode plates 412. In an example, the first collection electrode plates 421 and the second collection electrode plates 422 equally divide a space between two adjacent repulsion electrode plates 412. After the collection electrode plate group 42 and the repulsion electrode plate group 41 are detached, an inter-plate distance is quadrupled.

In the example, the first collection electrode plate group 42 may include a first connecting plate 423 and a second connecting plate 424. Two ends of the plurality of first collection electrode plates 421 are separately connected with the first connecting plate 423 and the second connecting plate 424. The second collection electrode plate group 42 may include a third connecting plate 425 and a fourth connecting plate 426. Two ends of the plurality of second collection electrode plate 422 are separately connected with the third connecting plate 425 and the fourth connecting plate 426. In such an arrangement, the overall movement of the first collection electrode plate group 42 and the second collection electrode plate group 42 is facilitated.

Optionally, a first clamping groove may be provided in each of the third connecting plate 425 and the fourth connecting plate 426, and two ends of the first collection electrode plate 421 may be inserted in the first clamping groove, to facilitate positioning of the first collection electrode plate group 42, to keep a preset interval between the first collection electrode plate group 42 and the second collection electrode plate group 42.

Optionally, a second clamping groove may be provided on an inner wall of the frame body 411, to accommodate the second collection electrode plate 422 or the third connecting plate 425 and the fourth connecting plate 426, to position and limit the second collection electrode plate group 42. A third clamping groove may be further provided on the inner wall of the frame body 411, to accommodate the first collection electrode plate 421 or the first connecting plate 423 and the second connecting plate 424, to position and limit the first collection electrode plate group 42.

Optionally, each of the first collection electrode plate 421 and the second collection electrode plate 422 may be T-shaped. Protruding portions on two ends of the first collection electrode plate 421 are conveniently propped on the second collection electrode plate group 42 or the frame body 411, and protruding portions on two ends of the second collection electrode plate 422 are conveniently propped on the frame body 411.

Optionally, after the first collection electrode plate 421 and the second collection electrode plate 422 are inserted in the repulsion electrode plate group 41, the highest positions of the first collection electrode plate 421 and the second collection electrode plate 422 may not exceed the height of the frame body 411, to facilitate the mounting and detachment of the frame body 411.

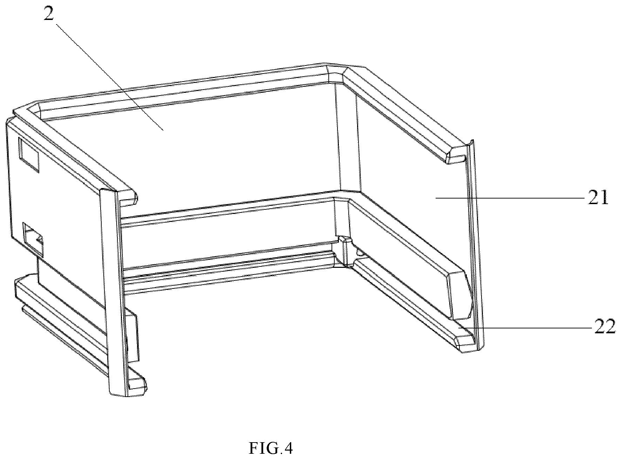

In some optional implementations of this embodiment, as shown in FIG. 4, the first mounting groove 21 may be provided on the protective cover 2, and the frame body 411 is pluggably disposed in the first mounting groove 21. In such an arrangement, the frame body 411 is pulled, so that the collection assembly 4 can be removed from the housing 1 relatively conveniently. A second mounting groove 22 may be further provided on the protective cover 2, and the emission assembly 3 is pluggably disposed in the second mounting groove 22. In such an arrangement, the emission assembly 3 is pulled, so that the emission assembly 3 can be removed from the housing 1 relatively conveniently.

Referring to FIG. 4, a boss protruding inward may be disposed on the inner wall of the protective cover 2. The boss divides the interior of the protective cover 2 into the first mounting groove 21 located above the boss and the second mounting groove 22 located below the boss. A protrusion extending inward is disposed on a top end of the protective cover 2. The boss and the protrusion fit to define the first mounting groove 21. A protrusion extending inward is disposed on a bottom end of the protective cover 2. The boss and the protrusion fit to define the second mounting groove 22.

In some optional implementations of this embodiment, as shown in FIG. 3, a handle may be disposed on the frame body 411, making it convenient to pull the frame body 411, to further facilitate a process of mounting and removing the frame body 411. Optionally, an indication sign may be disposed on the frame body 411 for indicating a mounting direction, to help to confirm that the frame body 411 is correctly placed during mounting. As shown in FIG. 3, a "TOP" sign is disposed on the frame body 411 to indicate that a signed side is the top. Optionally, a positioning member or a snap member may be disposed on the frame body 411, and a corresponding positioning member or a snap member may be disposed on the inner walls of the protective cover 2 and/or the housing 1, to facilitate positioning and fastening when the frame body 411 is placed.

Optionally, a positioning member or a snap member may be disposed on the emission assembly 3, and a corresponding positioning member or a snap member may be disposed on the inner walls of the protective cover 2 and/or the housing 1, to facilitate positioning and fastening when the emission assembly 3 is placed.

In an embodiment, the protective cover 2 may be an annular or rectangular structure having an opening. The opening is aligned with the door panel and may have a size corresponding to the size of the door panel, to protect the inner wall of the housing 1 apart from the door panel. In addition, a protective layer may be disposed on the door panel. The protective layer protects the door panel, and after the door panel is detached, the protective layer can be washed more conveniently.

For example, the housing 1 may be a cubic structure. The door panel is disposed on a back board of the housing 1, and the width of the door panel may be the same as the width of the back board. In this case, referring to FIG. 4, the protective cover 2 may be a U-shaped opening structure defined by three planes.

In some optional implementations of this embodiment, the protective cover 2 is a soft rubber cover made of an insulating material. In this way, the soft rubber cover can have excellent performance in high voltage resistance and pollution resistance and is convenient to wash. The soft rubber cover may be made of a rubber material or a resin material.

In addition, if the material of the protective cover 2 is changed, for example, the material is changed to a resin material or engineering plastic, the protective cover may be similarly removed from the housing 1. This is only a variant of the present invention. In the present invention, a soft rubber material, that is, an insulating material, is preferentially used to facilitate washing (scrubbing). However, the material is not limited to other rigid materials such as engineering plastic.

In this case, the protective cover 2 only needs to have particular stiffness, provided that the protective cover can keep the shape when being placed in the housing 1. When the emission assembly 3 and the collection assembly are located in the first mounting groove 21 and the second mounting groove 22 in the protective cover 2, the support force of the protective cover can be provided by the housing 1. As shown in FIG. 4, a boss protruding inward may be disposed on the inner wall of the protective cover 2. A corresponding recess provided on an outer wall of the protective cover may accommodate the boss protruding inward on the housing 1. The pressure of the collection assembly may be applied to the boss on the inner wall of the housing 1.

Optionally, the protective cover 2 is detachably disposed on the inner wall of the housing 1. A third mounting groove may be provided on the inner wall of the housing 1 to mount the protective cover 2. The third mounting groove may be a concave area provided on the inner wall of the housing 1. After the protective cover 2 is disposed in the third mounting groove, during subsequent mounting of the emission assembly 3, the emission assembly 3 may be supported by a bottom end (that is, the housing 1) of the third mounting groove.

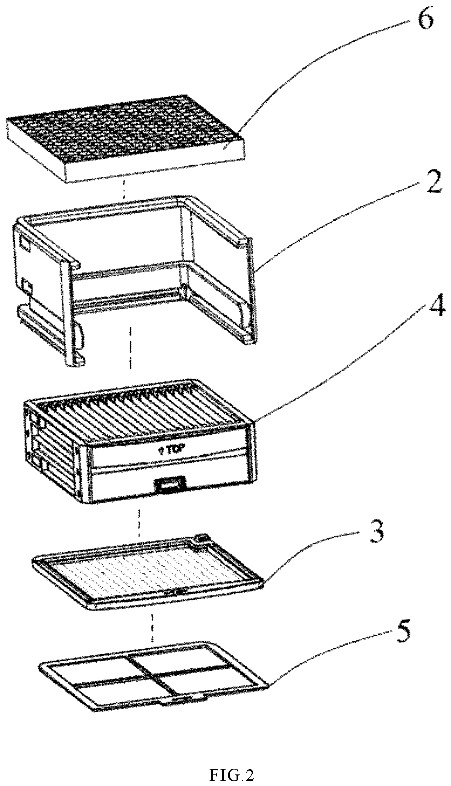

In some optional implementations of this embodiment, as shown in FIG. 1 and FIG. 2, the air purifier may further include a primary filter member 5. The primary filter member 5 is detachably disposed in the housing 1 and located at a side of the electrostatic filter element close to the air inlet. In such an arrangement, after pollutant-containing air enters the housing 1 through the air inlet, the air first passes through the primary filter member 5 to initially filter out relatively large pollutants such as hair, so that filtration can be more thorough, thereby improving the cleaning effect. In addition, relatively large pollutants can be prevented from causing blockage in the electrostatic filter element, thereby extending the life cycle. The primary filter member 5 is detachably provided to facilitate removal for cleaning.

A fourth mounting groove is provided on the inner wall of the housing 1. The primary filter member 5 may be pluggably disposed in the fourth mounting groove, to facilitate removal and mounting. The primary filter member 5 may be provided with a handle to facilitate operations, or an indication sign may be provided to facilitate determination of directions during mounting.

Optionally, the primary filter member 5 may be a filter screen. The filter screen may be formed by a plurality of filter wires distributed in an array, or may include a plurality of filter wires distributed perpendicular to each other in a staggered manner to define a screen structure. A pore diameter of the filter screen may be set by a person skilled in the art according to a required filtration degree of the filter screen. For example, when the primary filter member 5 only needs to filter out relatively large impurities, it may be set that a diameter of the screen pore is relatively large. In this case, the washing cycle of the primary filter member 5 is relatively long. When the primary filter member 5 needs to filter out relatively small impurities, it may be set that a diameter of the screen pore is relatively small. In this case, the washing cycle of the primary filter member 5 is relatively short.

Optionally, the filtration effect of the primary filter member 5 may be set, to keep the cleaning cycle of the primary filter member 5 consistent with the cleaning cycle of the electrostatic filter element, so that both the primary filter member 5 and the electrostatic filter element can be cleaned in one cleaning process, thereby reducing the labor consumption and improving the cleaning efficiency.

Optionally, a positioning member or a snap member may be disposed on the primary filter member 5, and a corresponding positioning member or snap member may be disposed on the inner wall of the housing 1, to facilitate positioning and fastening when the frame body 411 is placed.

In some optional implementations of this embodiment, as shown in FIG. 2, the air purifier further includes a catalytic filter element 6. The catalytic filter element 6 is detachably disposed in the housing 1 and located at a side of the electrostatic filter element close to the air outlet. In such an arrangement, air that has been purified by the electrostatic filter element enters the catalytic filter element 6 for further filtration, to make the filtration more thorough, thereby improving the cleaning effect. The catalytic filter element 6 is detachably provided, to facilitate removal and replacement.

A fifth mounting groove is provided on the inner wall of the housing 1. The primary filter member 5 may be pluggably disposed in the fifth mounting groove, to facilitate removal and mounting. The catalytic filter element 6 may be provided with a handle to facilitate operations, or an indication sign may be provided to facilitate determination of directions during mounting.

Optionally, the catalytic filter element 6 may include a plurality of hexagonal holes. The plurality of hexagonal holes are in tight contact with each other to increase a contact area between air and the catalytic filter element 6, thereby improving the purification effect. Optionally, a positioning member or a snap member may be disposed on the catalytic filter element 6, and a corresponding positioning member or a snap member may be disposed on the inner wall of the housing 1, to facilitate positioning and fastening when the frame body 411 is placed.

According to a second aspect, the embodiments of the present application provide a method for cleaning any foregoing air purifier. The method includes the following steps.

S101: Open the door panel.

S102: Remove the emission assembly 3 and the collection assembly 4 from the protective cover 2, and remove the protective cover 2 from the housing 1.

In this step, because the emission assembly 3and the collection assembly are detachably provided, and the protective cover 2 is detachably connected to the housing 1, according to the assembly and disassembly difficulty between the parts, it may be selected to first remove the emission assembly 3 and the collection assembly 4 from the protective cover 2 and then remove the protective cover 2. Alternatively, the emission assembly 3 and the collection assembly 4 may be first removed together with the protective cover 2 from the housing 1, and the emission assembly 3 and the collection assembly 4 are then separated from the protective cover 2.

S103: Wash the protective cover 2 and the collection assembly 4.

In the step, during the washing of the protective cover 2, the protective cover can be directly washed by using a detergent. After being washed, the protective cover is air dried. The collection assembly 4 may be cleaned through washing or wiping.

S104: Wipe the emission assembly 3.

In the step, a relatively soft material such as soft foam or sponge may be used to wipe the emission wires in the emission assembly 3. A force is controlled during wiping to prevent the emission wires from fracture, damage, or the like.

S105: Mount the protective cover 2 in the housing 1, and mount the emission assembly 3 and the collection assembly 4 in the protective cover 2.

In the step, according to the mounting difficulty between the parts, the protective cover 2 may be first mounted in the housing 1, and the emission assembly 3 and the collection assembly 4 are then mounted in the protective cover 2. Alternatively, the emission assembly 3 and the collection assembly 4 may be first mounted in the protective cover 2, and then the emission assembly 3, the collection assembly 4, and the protective cover 2 are mounted as a whole in the housing 1.

S106: Mount the door panel.

For the cleaning method for an air purifier provided in this embodiment, the detachable protective cover 2 is provided. In one aspect, pollutants accumulate on the protective cover 2 rather than the inner wall of the housing 1, to facilitate washing. In another aspect, the protective cover 2 is located between the housing 1 and the electrostatic filter element, to avoid the breakdown of the housing 1 in an electric field or the attenuation in insulation performance, thereby protecting the housing 1. The emission assembly 3 and the collection assembly 4 are detachably mounted in the protective cover 2, so that the emission assembly 3 and the collection assembly 4 can be separately cleaned. Corresponding cleaning manners may be used according to characteristics of the emission assembly 3 and the collection assembly 4, cleaning requirements, and the like, thereby improving the cleaning efficiency and cleaning effect.

In some optional implementations of this embodiment, the washing the collection assembly 4 further includes:
removing the collection electrode plate group 42 from the repulsion electrode plate group 41;
washing the collection electrode plate group 42; and
mounting the washed collection electrode plate group 42 in the repulsion electrode plate group 41.

In such an arrangement, the separate design of the collection electrode plate group 42 and the repulsion electrode plate group 41 facilitates separate washing. In addition, after the collection electrode plate group and the repulsion electrode plate group are removed, an inter-plate distance is increased, the cleaning surface is convenient to wash, and drying after washing can be accelerated.

Described above are merely some embodiments of the present application, and are not intended to limit the protection scope of the present application. A person skilled in the art may make various changes and variations to the present application. Within the spirit and principle of the present application, any modifications, equivalent substitutions, improvements, and the like shall fall within the protection scope of the present application. It should be noted that similar labels and letters indicate similar items in the accompanying drawings below, so that once an item is defined in one accompanying drawing, the item does not need to be further defined and explained in the subsequent accompanying drawings. The foregoing descriptions are merely specific implementations of the present application, but are not intended to limit the protection scope of the present application. Any variation or replacement that may be readily figured out by a person skilled in the art within the technical scope disclosed in the present application shall fall within the protection scope of the present application. Therefore, the protection scope of the present application shall be subject to the protection scope of the claims.

It should be noted that the relational terms herein such as first and second are used only to differentiate an entity or operation from another entity or operation, and do not require or imply any actual relationship or sequence between these entities or operations. Moreover, the terms "include", "comprise", or any variation thereof are intended to cover a non-exclusive inclusion. Therefore, in the context of a process, method, object, or device that includes a series of elements, the process, method, object, or device not only includes such elements, but also includes other elements not specified expressly, or may include inherent elements of the process, method, object, or device. If no more limitations are made, an element limited by "include a/an..." does not exclude other same elements existing in the process, the method, the object or the device which includes the element.

## Claims

1. An air purifier, comprising:
a housing, provided with an air inlet, an air outlet and a detachable door panel;
a protective cover, detachably disposed on an inner wall of the housing and being opposite to the door panel, and the protective cover located between the air inlet and the air outlet; and
an electrostatic filter element, comprising an emission assembly and a collection assembly, the emission assembly and the collection assembly being detachably disposed in the protective cover, and the emission assembly being located at a side of the collection assembly close to the air inlet.

2. The air purifier according to claim 1, wherein the collection assembly comprises:
a repulsion electrode plate group detachably disposed in the protective cover; and
at least a collection electrode plate group, the collection electrode plate group being detachably inserted in the repulsion electrode plate group.

3. The air purifier according to claim 2, wherein the repulsion electrode plate group comprises a frame body and a plurality of repulsion electrode plates distributed in an array in the frame body, wherein a first mounting groove matching with the frame body is provided on the protective cover, and the frame body is detachably disposed in the first mounting groove; and
the collection electrode plate group comprises a plurality of collection electrode plates distributed in an array, wherein the plurality of collection electrode plates are detachably inserted in the frame body and are distributed in a staggered manner with the plurality of repulsion electrode plates.

4. The air purifier according to claim 3, wherein the frame body is pluggably disposed in the first mounting groove; and
a handle is provided on the frame body; and/or an indication sign for indicating a mounting direction is provided on the frame body.

5. The air purifier according to any one of claims 1 to 4, wherein a second mounting groove is provided on the protective cover, the emission assembly is detachably disposed in the second mounting groove and is opposite to the collection assembly at an interval.

6. The air purifier according to any one of claims 1 to 4, wherein the protective cover is a soft rubber cover made of an insulating material.

7. The air purifier according to any one of claims 1 to 4, further comprising: a primary filter member, the primary filter member being detachably disposed in the housing and located at a side of the emission assembly close to the air inlet.

8. The air purifier according to any one of claims 1 to 4, further comprising: a catalytic filter element, the catalytic filter element being detachably disposed in the housing and located at a side of the collection assembly close to the air outlet.

9. A method for cleaning an air purifier according to any one of claims 1 to 8, comprising:
detaching the door panel;
removing the emission assembly and the collection assembly from the protective cover, and removing the protective cover from the housing;
washing the protective cover and the collection assembly;
wiping the emission assembly;
mounting the protective cover in the housing, and mounting the emission assembly and the collection assembly in the protective cover; and
mounting the door panel.

10. The method according to claim 9, wherein the washing the collection assembly comprises:
removing the collection electrode plate group from the repulsion electrode plate group;
washing the collection electrode plate group; and
mounting the washed collection electrode plate group in the repulsion electrode plate group.
